# EUROPEAN PATENT APPLICATION

(11) **EP 4 624 417 A1**
(43) Date of publication of application: **01.10.2025**
(21) Application number: 25160335.3
(22) Date of filing: 26.02.2025
(51) Int. Cl.: C01B 25/45

(54) **LITHIUM IRON PHOSPHATE MATERIAL, PREPARATION METHOD AND USE**

(30) Priority: 29.03.2024 CN 202410378421
(71) Applicant: Guizhou CNGR Xingyang Energy Storage Technology Co., Ltd., Guiyang, Guizhou 550399 (CN); Hunan CNGR New Energy Science & Technology Co., Ltd., Ningxiang Changsha, Hunan 410600 (CN)
(72) Inventor: YIN, Shuo, GUIYANG, Guizhou Province, 550399 (CN); YIN, Wei, GUIYANG, Guizhou Province, 550399 (CN); JIANG, Zunlong, GUIYANG, Guizhou Province, 550399 (CN); WU, Xingke, GUIYANG, Guizhou Province, 550399 (CN); GU, Yixun, GUIYANG, Guizhou Province, 550399 (CN)
(74) Representative: Locas, Davide

(57) **Abstract**

The present invention discloses a lithium iron phosphate material, a preparation method and use. The lithium iron phosphate material includes lithium iron phosphate particles, where a volume proportion of the lithium iron phosphate particles having a particle size D less than 1 µm is X, 50%<X≤75%, and a volume proportion of the lithium iron phosphate particles having the particle size D greater than or equal to 3 µm is Z, 5%<Z<25%. The lithium iron phosphate material provided in the present invention, through adjustment of the particle size distribution, can improve the compacted density of a finished material thereof while maintaining stable electrochemical performance thereof, so that the material achieves an effect of filling part of materials with a small particle size between materials with a large particle size, thus further improving the compacted density thereof, and such similar particle size distribution behavior will not degrade the electrochemical performance of the material.

## Description

### TECHNICAL FIELD

The present invention relates to the technical field of positive electrode materials, and specifically to a lithium iron phosphate material, a preparation method and use.

### BACKGROUND ART

With the rapid development of electric vehicles and renewable energy markets, demands for high-performance, low-cost and environment-friendly lithium-ion batteries are gradually increasing. The performance of a positive electrode material, as an important component of the lithium-ion battery, directly determines energy density, cycle life and safety of the battery. Lithium iron phosphate (LiFePO₄) has become one of the positive electrode materials with the most promising application prospect and potential at present due to high energy density, and excellent cycle performance and safety thereof.

However, a lithium iron phosphate positive electrode material has disadvantages in two aspects: on the one hand, it has a lower compacted density, generally between 2.1 g/cm³ and 2.4 g/cm³, than a ternary material; on the other hand, the electrochemical capacity thereof is inferior to that of the ternary material, which is determined by properties of the material itself. Therefore, it is necessary to increase the compacted density of the material while ensuring maximum exertion of the electrochemical performance thereof, so as to increase the energy density thereof.

To sum up, how to improve the above performances of the lithium iron phosphate material has become a hotspot and difficulty in current research.

### SUMMARY

The present invention aims at providing a lithium iron phosphate material, a preparation method and use, so as to improve compacted density of lithium iron phosphate while maintaining electrochemical performance thereof.

The present invention is implemented as follows.

In the first aspect, the present invention provides a lithium iron phosphate material, including lithium iron phosphate particles, where a volume proportion of the lithium iron phosphate particles having a particle size D less than 1 µm is X, 50%<X≤75%, and a volume proportion of the lithium iron phosphate particles having the particle size D greater than or equal to 3 µm is Z, 5%<Z<25%.

In optional embodiments, the lithium iron phosphate material meets at least one of a-f as follows:
a. 50%<X≤70%, optionally, 50%<X≤60%, and optionally, 50%<X≤55%;
b. 5%<Z≤20%, optionally, 5%<Z≤10%; or, 20%<Z<25%;
c. a volume proportion of lithium iron phosphate particles having the particle size D greater than or equal to 1 µm and less than 3 µm being Y, where 0%<Y≤45%, optionally 10%<Y≤45%, optionally 20%<Y≤30%, and optionally 25%<Y≤30%;
d. the particle size of the lithium iron phosphate particles ranging from 0.01 µm to 15 µm, and optionally, the particle size of the lithium iron phosphate particles ranging from 0.1 µm to 10 µm;
e. a particle size distribution curve of the lithium iron phosphate particles being in bimodal particle size distribution, where optionally, in the bimodal particle size distribution curve, the particle size at pits between two peaks ranges from 0.5 µm to 2 µm, and optionally, a volume proportion of the lithium iron phosphate particles at the pits is greater than 0%; and
f. a compacted density ranging from 2.46 g/cm³ to 2.55 g/cm³.

In the second aspect, the present invention provides a preparation method for the lithium iron phosphate material according to one of the preceding embodiments, including: mixing a ferrophosphorus source, a lithium source and a carbon source, and then performing sintering and pulverization, so as to render the lithium iron phosphate material.

In optional embodiments, the mixing includes: mixing the ferrophosphorus source, the lithium source and the carbon source with water to render a mixed slurry, grinding the mixed slurry, and then performing granulation.

In optional embodiments, the granulation is performed by spray drying, where process parameters of the spray drying include: a supply speed of the mixed slurry ranging from 50 mL/min to 200 mL/min, an air inlet temperature ranging from 225 °C to 255 °C, and an air outlet temperature ranging from 95 °C to 120 °C.

In optional embodiments, the sintering includes a first-stage sintering and a second-stage sintering, where the first-stage sintering is performed at a temperature ranging from 450 °C to 550 °C, for a duration of sintering ranging from 2 h to 4 h; and the second-stage sintering is performed at a temperature ranging from 790 °C to 805 °C, for a duration of sintering ranging from 8 h to 12 h.

In optional embodiments, the pulverization includes jet milling, where optionally, process parameters of the jet milling include: a classification frequency ranging from 20 Hz to 80 Hz, a pulverization pressure ranging from 0.35 MPa to 0.45 MPa, and a feeding rate ranging from 10 g/min to 50 g/min.

In the third aspect, the present invention provides a positive electrode plate, including the lithium iron phosphate material according to the preceding embodiments, or the lithium iron phosphate material obtained by the method according to any one of the preceding embodiments.

In the fourth aspect, the present invention provides a lithium-ion battery, including the positive electrode plate according to the preceding embodiments.

In the fifth aspect, the present invention provides an electric-involved device, including the lithium-ion battery according to the preceding embodiments.

The present invention has the following beneficial effects.

Unreasonable particle size distribution of the lithium iron phosphate material will make the material retain excessive voids in a compaction environment of 3 T, thus reducing the density, and narrowing a possible application range of the material. The lithium iron phosphate material provided in the present invention, through adjustment of the particle size distribution, can improve the compacted density of a finished material thereof while maintaining stable electrochemical performance thereof, so that the material achieves an effect of filling part of materials with a small particle size between materials with a large particle size, thus further improving the compacted density thereof, and such similar particle size distribution behavior will not degrade the electrochemical performance of the material.

### BRIEF DESCRIPTION OF DRAWINGS

In order to more clearly illustrate technical solutions of embodiments of the present invention, drawings which need to be used in the embodiments will be briefly introduced below. It should be understood that the drawings merely show some embodiments of the present invention, and thus should not be considered as limitation to the scope, and those ordinarily skilled in the art still could obtain other relevant drawings according to these drawings, without using any inventive efforts.

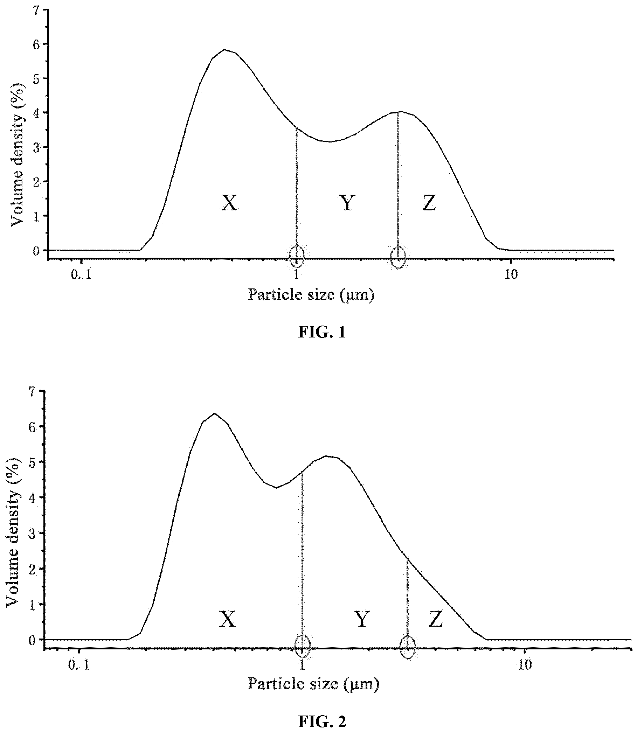

FIG. 1 is a particle size distribution chart of lithium iron phosphate in Example 1;
FIG. 2 is a particle size distribution chart of lithium iron phosphate in Example 4;

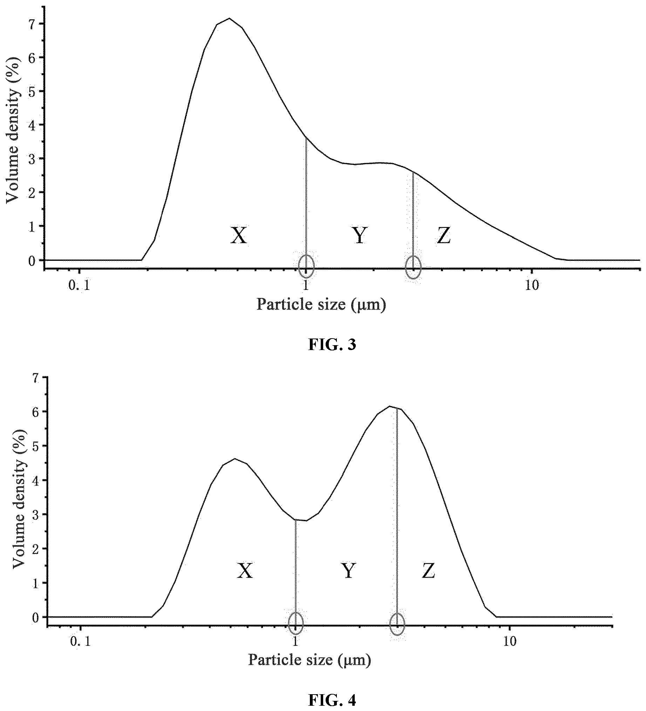

FIG. 3 is a particle size distribution chart of lithium iron phosphate in Example 5;
FIG. 4 is a particle size distribution chart of lithium iron phosphate in Comparative Example 3; and

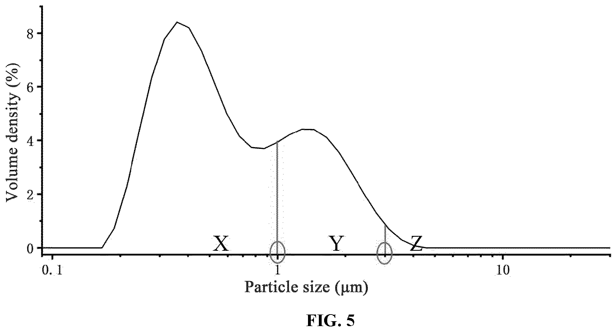

FIG. 5 is a particle size distribution chart of lithium iron phosphate in Comparative Example 7.

### DETAILED DESCRIPTION OF EMBODIMENTS

In order to make objectives, technical solutions and advantages of the embodiments of the present invention clearer, the technical solutions in the embodiments of the present invention will be described clearly and completely below. Embodiments, for which no concrete conditions are specified, are performed according to conventional conditions or conditions recommended by manufactures. Where manufacturers of reagents or instruments used are not specified, they are conventional products commercially available.

In the first aspect, the present invention provides a lithium iron phosphate material, including lithium iron phosphate particles, where a volume proportion of the lithium iron phosphate particles having a particle size D less than 1 µm is X, 50%<X≤75%, and a volume proportion of the lithium iron phosphate particles having the particle size D greater than or equal to 3 µm is Z, 5%<Z<25%.

Unreasonable particle size distribution of the lithium iron phosphate material will make the material retain excessive voids in a compaction environment of 3 T, thus reducing the density, and narrowing a possible application range of the material. The lithium iron phosphate material provided in the present invention, through adjustment of the particle size distribution, can improve a compacted density of a finished material thereof while maintaining stable electrochemical performance thereof, so that the material achieves an effect of filling part of materials with a small particle size between materials with a large particle size, thus further improving the compacted density thereof, and such similar particle size distribution behavior will not degrade the electrochemical performance of the material.

Further, in the present application, in order to take the compaction and the rate performance both into account, certain fine particles are needed to improve the rate performance, and certain coarse particles are also needed to improve the compacted density. Specifically, 50%<X≤75% should be met, where X may be 51%, 55%, 60%, 65%, 70%, 75% or any value within 50%<X≤75%, if X is too small, there are fewer fine particles, and the rate performance is reduced; if X is too large, there are more fine particles, and the compaction is reduced. In addition, 5%<Z<25% should be met, where Z may be 6%, 10%, 15%, 20%, 25% or any value within 5%<Z<25%, and if Z is too large, there are more coarse particles, and the rate performance is poor; and Z is too small, there are more fine particles, and fewer coarse particles, and the compaction is reduced.

In some optional embodiments, 50%<X≤60%, and 20%<Z<25%. Optionally, 50%<X≤55%, and 20%<Z<25%.

In optional embodiments, the lithium iron phosphate material meets at least one of a-f as follows:
a. 50%<X≤70%, optionally, 50%<X≤60%;
b. 5%<Z≤20%, optionally, 5%<Z≤10%;
c. a volume proportion of lithium iron phosphate particles having the particle size D greater than or equal to 1 µm and less than 3 µm being Y, where 0%<Y≤45%, optionally 10%<Y≤45%;
   specifically, Y may be 1%, 5%, 10%, 15%, 20%, 25%, 30%, 35%, 40%, 45% or any value within 0%<Y≤45%; optionally, 20%<Y≤30%, and optionally, 25%<Y≤30%;
d. a particle size distribution curve of the lithium iron phosphate particles being in bimodal particle size distribution, where optionally, in the bimodal particle size distribution, the particle size at pits between two peaks ranges from 0.5 µm to 2 µm, and optionally, a volume proportion of the lithium iron phosphate particles at the pits is greater than 0%;
   the lithium iron phosphate particles in continuous distribution have the particle size in continuous change, without a discrete phenomenon, and have better rate performance than bimodal discontinuous particles;
   specifically, the particle size at the pits between two peaks is 0.5 µm, 1 µm, 1.5 µm, 2 µm or any value between 0.5 µm and 2 µm. When the particle size at the pits between two peaks ranges from 0.5 µm to 2 µm, it is conducive to preparing the lithium iron phosphate particles with reasonable distribution of coarse particles and fine particles; when the particle size at the pits between two peaks is greater than 2 µm, it is not conducive to generation of fine particles; and when the particle size at the pits between two peaks is less than 0.5 µm, it is not conducive to generation of coarse particles;
e. the particle size of the lithium iron phosphate particles ranging from 0.01 µm to 15 µm, and optionally, the particle size of the lithium iron phosphate particles ranging from 0.01 µm to 10 µm, where the particle size of the lithium iron phosphate particles specifically may be 0.01 µm, 0.05 µm, 0.1 µm, 0.5 µm, 1 µm, 5 µm, 10 µm, 15 µm or any value between 0.01 µm and 15 µm;
   for the range of the particle size distribution, if a particle size distribution range of the lithium iron phosphate particles is too wide, the compacted density will be affected, where specifically, coarse particles and fine particles have a poor filling effect in a compaction process, and cannot form a continuous solid structure; and if the particle size distribution range of the lithium iron phosphate particles is too narrow, the filled particles have large gaps therebetween, and the compacted density is reduced;
   optionally, a particle size range (particle size distribution range) of the lithium iron phosphate particles is 0.1-10 µm. Within this range, neither fine particles less than 0.1 µm nor coarse particles greater than 10 µm exist, which is beneficial to the filling effect of the particles in the compaction process, so as to form the continuous solid structure. If the distribution range is too narrow, particle gradation is inappropriate, thus causing large gaps between the same coarse particles and reduced compacted density;
   besides, controlling a total particle size range of the lithium iron phosphate material also helps to ensure the electrochemical performance thereof. This is because an excessively wide particle size range of a material causes that for a sample with excessively large particles, an electrolytic solution cannot infiltrate into interior of the material with a large particle size during an electrochemical reaction, so that part of the lithium iron phosphate material cannot participate in an electrochemical oxidation-reduction process, thus leading to reduced capacity; by reasonably controlling the distribution range of the particle size thereof, the material can be ensured to be fully infiltrated, and exert all the properties thereof in the electrochemical process; and
f. the compacted density ranging from 2.46 g/cm³ to 2.55 g/cm³, where the compacted density specifically may be 2.46 g/cm³, 2.47 g/cm³, 2.48 g/cm³, 2.49 g/cm³, 2.50 g/cm³, 2.51 g/cm³, 2.52 g/cm³, 2.53 g/cm³, 2.54 g/cm³, 2.55 g/cm³ or any value between 2.46 g/cm³ and 2.55 g/cm³.

In the second aspect, the present invention provides a preparation method for a lithium iron phosphate material, including: mixing a ferrophosphorus source, a lithium source and a carbon source, and then performing sintering and pulverization, so as to render the lithium iron phosphate material.

The present invention provides a preparation method for a lithium iron phosphate material, which renders the lithium iron phosphate material with specific particle size distribution mainly by adjusting sintering and pulverization stages, and remarkably improves a compacted density and electrochemical performance of a lithium iron phosphate positive electrode. The preparation method of the present invention is simple and efficient, and is expected to promote application of a lithium iron phosphate positive electrode material in the fields of electric vehicles and renewable energy sources.

In optional embodiments, the mixing includes: mixing the ferrophosphorus source, the lithium source and the carbon source with water to render a mixed slurry, grinding the mixed slurry, and then performing granulation. Raw materials are mixed with water and then ground, which facilitates uniform mixing of various raw materials.

In optional embodiments, the mixing meets at least one of A-H as follows:
A. the ferrophosphorus source being at least one selected from iron phosphate, ferrous phosphate, iron oxide and phosphoric acid and ammonium hydrogen phosphate, where iron oxide needs to be used with a phosphorus source such as phosphoric acid and ammonium hydrogen phosphate as the ferrophosphorus source;
B. the lithium source being at least one selected from lithium carbonate, lithium hydroxide and lithium acetate;
C. the carbon source being at least one selected from glucose, sucrose, fructose, cellulose, polylactide, gelatin, polyethylene glycol, polyvinyl alcohol and polyvinylpyrrolidone;
D. a solid content of the mixed slurry being less than 60 wt%, where the solid content of the mixed slurry specifically may be 60 wt%, 50 wt%, 40 wt%, 30 wt%, 20 wt% or any value less than 60 wt%, and adding water is beneficial to uniform mixing of the raw materials, but also increases energy consumption of subsequent granulation processes;
E. a molar ratio of the ferrophosphorus source to the lithium source (lithium carbonate) being 2:1-1.08, where the molar ratio specifically may be 2:1, 2:1.02, 2:1.05, 2:1.08 or any value between 2:1 and 1.08; and the carbon source being between 10% and 15% of a total mass of the ferrophosphorus source and lithium source, where the carbon source specifically may be 10%, 11%, 12%, 13%, 14%, 15% or any value between 10% and 15%;
F. before grinding the mixed slurry, stirring for 5 min to 60 min using a high-speed stirrer, where the stirring specifically may be performed for 5 min, 10 min, 15 min, 20 min, 25 min, 30 min, 35 min, 40 min, 45 min, 50 min, 55 min, 60 min or any value between 5 min and 60 min;
G. performing the granulation by spray drying; and
H. process parameters of the spray drying including: a supply speed of the mixed slurry ranging from 50 mL/min to 200 mL/min, where the supply speed specifically may be 50 mL/min, 100 mL/min, 150 mL/min, 200 mL/min or any value between 50 mL/min and 200 mL/min; an air inlet temperature ranging from 225 °C to 255 °C, where the air inlet temperature specifically may be 225 °C, 230 °C, 235 °C, 240 °C, 245 °C, 250 °C, 255 °C or any value between 225 °C and 255 °C; and an air outlet temperature ranging from 95 °C to 120 °C, where the air outlet temperature specifically may be 95 °C, 100 °C, 105 °C, 110 °C, 115 °C, 120 °C or any value between 95 °C and 120 °C.

In optional embodiments, the sintering includes two stages of sintering in a protective atmosphere.

Optionally, the sintering includes a first-stage sintering and a second-stage sintering. A temperature of the first-stage sintering ranges from 450 °C to 550 °C, and specifically may be 450 °C, 470 °C, 490 °C, 510 °C, 530 °C, 550 °C or any value between 450 °C and 550 °C; and a duration of the sintering ranges from 2 h to 4 h, and specifically may be 2 h, 2.5 h, 3 h, 3.5 h, 4 h or any value between 2 h and 4 h. A temperature of the second-stage sintering ranges from 790 °C to 805 °C, and specifically may be 790 °C, 795 °C, 800 °C, 805 °C or any value between 790 °C and 805 °C; and a duration of the sintering ranges from 8 h to 12 h, and specifically may be 8 h, 9 h, 10 h, 11 h, 12 h or any value between 8 h and 12 h. If the duration of the sintering is too long or the sintering temperature is too high, primary particles will continuously grow, thus affecting the particle size distribution of the obtained lithium iron phosphate material.

It should be noted that, in the present embodiment, there is no cooling process between the two stages of sintering, and after the first-stage sintering, a furnace temperature is adjusted to perform the second-stage sintering.

In optional embodiments, the pulverization includes jet milling. Optionally, process parameters of the jet milling include: a classification frequency ranging from 20 Hz to 80 Hz, a pulverization pressure ranging from 0.35 MPa to 0.45 MPa, and a feeding rate ranging from 10 g/min to 50 g/min. Specifically, the classification frequency is 80 Hz, 70 Hz, 60 Hz, 55 Hz, 50 Hz, 45 Hz, 40 Hz, 35 Hz, 30 Hz, 20 Hz or any value between 20 Hz and 80 Hz; the pulverization pressure is 0.35 MPa, 0.37 MPa, 0.4 MPa, 0.43 MPa, 0.45 MPa, or any value between 0.35 MPa and 0.45 MPa; and the feeding rate is 10 g/min, 15 g/min, 20 g/min, 30 g/min, 40 g/min, 50 g/min and any value between 10 g/min and 50 g/min.

If the frequency of jet milling is too high, the pressure is too large or the feeding rate is too small, small particles account for a too high proportion; on the contrary, if the frequency of jet milling is too low, the pressure is too small or the feeding rate is too high, large particles account for a too high proportion, both of which are unfavorable for taking both compacted density and electrochemical performance of the material into account.

In the third aspect, the present invention provides a positive electrode plate, including the lithium iron phosphate material according to the preceding embodiments or the lithium iron phosphate material obtained by the method according to any one of the preceding embodiments.

In the fourth aspect, the present invention provides a lithium-ion battery, including the positive electrode plate according to the preceding embodiments.

In the fifth aspect, the present invention provides an electric-involved device, including the lithium-ion battery according to the preceding embodiments.

Characteristics and performances of the present invention will be further described in detail below in conjunction with examples.

### Example 1:

The present example provided a preparation method for a lithium iron phosphate material, including steps as follows:
(1) adding iron phosphate and lithium carbonate taken in a molar ratio of 2:1.05 into deionized water, then adding glucose and PEG respectively, a mass of glucose being 5 wt% of a total mass of iron phosphate and lithium carbonate, a mass of PEG being 7 wt% of the total mass of iron phosphate and lithium carbonate, a solid content in the deionized water being 35%, and stirring and mixing for 30 min, so as to render a mixed slurry;
(2) introducing the mixed slurry into a sand mill to be ground for 4 h, so as to render a ground slurry, which had a particle size D50 of 0.35 µm, and Dmax of 0.9 µm;
(3) introducing the above ground slurry into a spray drying device for granulation, and performing centrifugal spray drying, an air inlet temperature being 250 °C, an air outlet temperature being 110 °C, and a supply speed of the mixed slurry being 100 mL/min;
(4) performing two stages of sintering on the above dried powder in a box type furnace, so as to render a sintered material, where a first-stage sintering was performed at a temperature of 500 °C for 2 h, and a second-stage sintering was performed at a temperature of 800 °C for 8 h; and
(5) pulverizing the above sintered material in a jet mill, so as to render lithium iron phosphate, where a classification frequency was 35 Hz, a pulverization pressure was 0.35 MPa, and a feeding speed was 40 g/min.

### Example 2:

The present example provided a preparation method for a lithium iron phosphate material, which was different from Example 1 in step (4) and step (5), with specific conditions as follows:
(4) performing the first-stage sintering at a temperature of 500 °C for 2 h, and performing the second-stage sintering at a temperature of 790 °C for 8 h; and
(5) pulverizing the above sintered material in the jet mill, so as to render lithium iron phosphate, where the classification frequency was 35 Hz, the pulverization pressure was 0.35 MPa, and the feeding speed was 40 g/min.

### Example 3:

The present example provided a preparation method for a lithium iron phosphate material, which was different from Example 1 in step (4) and step (5), with specific conditions as follows:
(4) performing the first-stage sintering at a temperature of 500 °C for 2 h, and performing the second-stage sintering at a temperature of 790 °C for 8 h; and
(5) pulverizing the above sintered material in the jet mill, so as to render lithium iron phosphate, where the classification frequency was 35 Hz, the pulverization pressure was 0.37 MPa, and the feeding speed was 40 g/min.

### Example 4:

The present example provided a preparation method for a lithium iron phosphate material, which was different from Example 1 in step (4) and step (5), with specific conditions as follows:
(4) performing the first-stage sintering at a temperature of 500 °C for 2 h, and performing the second-stage sintering at a temperature of 790 °C for 8 h; and
(5) pulverizing the above sintered powder material in the jet mill, where the classification frequency was 35 Hz, the pulverization pressure was 0.40 MPa, and the feeding speed was 40 g/min.

### Example 5:

The present example provided a preparation method for a lithium iron phosphate material, which was different from Example 1 in step (4) and step (5), with specific conditions as follows:
(4) performing the first-stage sintering at a temperature of 500 °C for 2 h, and performing the second-stage sintering at a temperature of 795 °C for 8 h; and
(5) pulverizing the above sintered material in the jet mill, so as to render lithium iron phosphate, where the classification frequency was 35 Hz, the pulverization pressure was 0.43 MPa, and the feeding speed was 40 g/min.

### Example 6

The present example provided a preparation method for a lithium iron phosphate material, which was different from Example 1 in step (4) and step (5), with specific conditions as follows:
(4) performing the first-stage sintering at a temperature of 500 °C for 2 h, and performing the second-stage sintering at a temperature of 800 °C for 8 h; and
(5) pulverizing the above sintered powder material in the jet mill, where the classification frequency was 35 Hz, the pulverization pressure was 0.35 MPa, and the feeding speed was 30 g/min.

### Example 7

The present example provided a preparation method for a lithium iron phosphate material, which was different from Example 1 in step (4) and step (5), with specific conditions as follows:
(4) performing the first-stage sintering at a temperature of 500 °C for 2 h, and performing the second-stage sintering at a temperature of 802 °C for 8 h; and
(5) pulverizing the above sintered powder material in the jet mill, where the classification frequency was 35 Hz, the pulverization pressure was 0.35 MPa, and the feeding speed was 38 g/min.

### Example 8

The present example provided a preparation method for a lithium iron phosphate material, which was different from Example 1 in step (4) and step (5), with specific conditions as follows:
(4) performing the first-stage sintering at a temperature of 500 °C for 2 h, and performing the second-stage sintering at a temperature of 800 °C for 8 h; and
(5) pulverizing the above sintered powder material in the jet mill, where the classification frequency was 35 Hz, the pulverization pressure was 0.35 MPa, and the feeding speed was 42 g/min.

### Comparative Example 1:

The present comparative example provided a preparation method for a lithium iron phosphate material, which was different from Example 1 in step (4) and step (5), with specific conditions as follows:
(4) performing the first-stage sintering at a temperature of 500 °C for 2 h, and performing the second-stage sintering at a temperature of 815 °C for 8 h; and
(5) pulverizing the above sintered powder material in the jet mill, where the classification frequency was 35 Hz, the pulverization pressure was 0.32 MPa, and the feeding speed was 40 g/min.

### Comparative Example 2:

The present comparative example provided a preparation method for a lithium iron phosphate material, which was different from Example 1 in step (4) and step (5), with specific conditions as follows:
(4) performing the first-stage sintering at a temperature of 500 °C for 2 h, and performing the second-stage sintering at a temperature of 810 °C for 8 h; and
(5) pulverizing the above sintered powder material in the jet mill, where the classification frequency was 35 Hz, the pulverization pressure was 0.33 MPa, and the feeding speed was 40 g/min.

### Comparative Example 3:

The present comparative example provided a preparation method for a lithium iron phosphate material, which was different from Example 1 in step (4) and step (5), with specific conditions as follows:
(4) performing the first-stage sintering at a temperature of 500 °C for 2 h, and performing the second-stage sintering at a temperature of 810 °C for 8 h; and
(5) pulverizing the above sintered powder material in the jet mill, where the classification frequency was 35 Hz, the pulverization pressure was 0.30 MPa, and the feeding speed was 40 g/min.

### Comparative Example 4:

The present comparative example provided a preparation method for a lithium iron phosphate material, which was different from Example 1 in step (4) and step (5), with specific conditions as follows:
(4) performing the first-stage sintering at a temperature of 500 °C for 2 h, and performing the second-stage sintering at a temperature of 815 °C for 8 h; and
(5) pulverizing the above sintered powder material in the jet mill, where the classification frequency was 35 Hz, the pulverization pressure was 0.30 MPa, and the feeding speed was 40 g/min.

### Comparative Example 5:

The present comparative example provided a preparation method for a lithium iron phosphate material, which was different from Example 1 in step (4) and step (5), with specific conditions as follows:
(4) performing the first-stage sintering at a temperature of 500 °C for 2 h, and performing the second-stage sintering at a temperature of 785 °C for 8 h; and
(5) pulverizing the above sintered material in the jet mill, so as to render lithium iron phosphate, where the classification frequency was 35 Hz, the pulverization pressure was 0.55 MPa, and the feeding speed was 40 g/min.

### Comparative Example 6:

The present comparative example provided a preparation method for a lithium iron phosphate material, which was different from Example 1 in step (4) and step (5), with specific conditions as follows:
(4) performing the first-stage sintering at a temperature of 500 °C for 2 h, and performing the second-stage sintering at a temperature of 775 °C for 8 h; and
(5) pulverizing the above sintered material in the jet mill, so as to render lithium iron phosphate, where the classification frequency was 35 Hz, the pulverization pressure was 0.55 MPa, and the feeding speed was 40 g/min.

### Comparative Example 7:

The present comparative example provided a preparation method for a lithium iron phosphate material, which was different from Example 1 in step (4) and step (5), with specific conditions as follows:
(4) sintering the above dried powder in the box type furnace, where the first-stage sintering was performed at a temperature of 500 °C for 2 h, and the second-stage sintering was performed at a temperature of 775 °C for 8 h; and
(5) pulverizing the above sintered powder material in the jet mill, where the classification frequency was 35 Hz, the pulverization pressure was 0.47 MPa, and the feeding speed was 40 g/min.

Test method for particle size distribution:
Taking water as a dispersing agent, the particle size distribution of the lithium iron phosphate materials obtained in the above examples and comparative examples was tested using Mastersizer 3000 particle analyzer, with reference to test standard GB/T 19077-2016, Particle Size Analysis-Laser Diffraction Methods, and results are as shown in TABLE 1.

**TABLE 1 Volume Proportions and Particle Size Ranges in Examples 1-8 and Comparative Examples 1-7**

| | D<1 µm volume proportion (X) | D≥3 µm volume proportion (Z) | 1 µm≤D<3 µm volume proportion (Y) | Particle size range |
|---|---|---|---|---|
| Example 1 | 52.15% | 20.24% | 27.61% | 0.1-10 µm |
| Example 2 | 52.49% | 10.61% | 36.90% | 0.1-8 µm |
| Example 3 | 55.06% | 9.68% | 35.26% | 0.1-8 µm |
| Example 4 | 59.30% | 7.00% | 33.70% | 0.1-7 µm |
| Example 5 | 62.64% | 14.14% | 23.22% | 0.1-15 µm |
| Example 6 | 56.39% | 22.17% | 21.44% | 0.1-10 µm |
| Example 7 | 53.14% | 24.35% | 22.51% | 0.1-10 µm |
| Example 8 | 51.96% | 21.48% | 26.56% | 0.1-15 µm |
| Comparative Example 1 | 47.33% | 21.52% | 31.15% | 0.1-12 µm |
| Comparative Example 2 | 47.48% | 19.32% | 33.20% | 0.1-10 µm |
| Comparative Example 3 | 37.35% | 26.89% | 35.76% | 0.1-9 µm |
| Comparative Example 4 | 38.51% | 39.11% | 22.38% | 0.2-13 µm |
| Comparative Example 5 | 93.35% | 6.65% | 0% | 0.1-5 µm |
| Comparative Example 6 | 92.32% | 1.31% | 6.37% | 0.1-5 µm |
| Comparative Example 7 | 72.11% | 1.08% | 26.81% | 0.1-5 µm |

Test method for compacted density:
The compacted density of the lithium iron phosphate materials obtained in the above examples and comparative examples was tested using UIM 7305 compacted density meter from SUNS, by a test method as follows: weighing 1 g of lithium iron phosphate on a balance and placing the same in a clean mold, a radius of a hole in the mold being 6.5 mm, then placing the mold on a platen of the meter, and performing the test at a test pressure of 3 T. Results are as shown in TABLE 2.

Test method for electrochemical performance:
The electrochemical performance test specifically included the following steps.

Preparation of positive electrode plate: mixing the positive electrode materials in the examples and comparative examples respectively with conductive carbon black and a binder PVDF (polyvinylidene fluoride) according to 8:1:1, adding a solvent to formulate a slurry, uniformly coating the slurry on an aluminum foil, and drying to form the positive electrode plate.

Battery assembly and test: using a metal lithium plate as a negative electrode plate, using 1 mol/L LiPF₆ in EC: DMC: EMC=1:1:1 (volume ratio) as an electrolytic solution, assembling a battery shell, the above positive electrode plate, the negative electrode plate, a separator (PE double-layer ceramic separator), an elastic sheet, and a gasket into a button battery in a vacuum glove box; performing the electrochemical performance test using a LAND test system CT3002A, and performing charge and discharge tests at 0.1 C and 3 C (specific capacity used to calculate current being 170 mAh g⁻¹) under a condition of 2.0-3.75 V, at a test temperature of 25 °C±1 °C, and humidity less than 40%, with results as shown in TABLE 2.

**TABLE 2 Compacted Density and Electrochemical Performance in Examples and Comparative Examples**

| | Compacted density g/cm³ | 0.1 C discharge specific capacity mAh/g | 3C discharge specific capacity mAh/g | 3 C/0.1 C |
|---|---|---|---|---|
| Example 1 | 2.544 | 159.72 | 131.13 | 0.82 |
| Example 2 | 2.490 | 158.40 | 130.58 | 0.82 |
| Example 3 | 2.480 | 159.00 | 132.54 | 0.83 |
| Example 4 | 2.462 | 155.55 | 132.08 | 0.84 |
| Example 5 | 2.460 | 158.88 | 132.08 | 0.83 |
| Example 6 | 2.531 | 158.32 | 128.14 | 0.81 |
| Example 7 | 2.525 | 158.65 | 129.82 | 0.82 |
| Example 8 | 2.522 | 159.68 | 129.71 | 0.81 |
| Comparative Example 1 | 2.466 | 157.40 | 124.23 | 0.79 |
| Comparative Example 2 | 2.487 | 160.48 | 125.23 | 0.78 |
| Comparative Example 3 | 2.440 | 155.77 | 115.21 | 0.74 |
| Comparative Example 4 | 2.432 | 147.20 | 96.42 | 0.66 |
| Comparative Example 5 | 2.387 | 155.15 | 90.00 | 0.58 |
| Comparative Example 6 | 2.401 | 157.97 | 133.31 | 0.84 |
| Comparative Example 7 | 2.441 | 159.74 | 141.62 | 0.88 |

By comparing Examples 1-8 and Comparative Examples 1-7, it can be found that they were mainly different in the volume proportion ranges of small and medium particle size (D<1 µm) and large particle size (D≥3 µm) in the examples, and by effectively controlling the maximum particle size of the finished powder material thereof, the iron phosphate prepared in the present application has better compacted density, discharge specific capacity and rate performance.

By comparing Examples 1-8 with each other, it can be found that various particles with different sizes need to keep a certain volume proportion, so as to achieve proper particle gradation, where the proportion of small and medium particles (D<1 µm) should not be too high, and is preferably kept at 50-60%; a certain proportion of the large particle size (D≥3 µm) is also required, and the effect is better when the proportion is kept at 20-25%, but when too large particles (e.g., >10 µm) are present, certain adverse effect can be generated on the compacted density and electrochemical performance of the material.

The above-mentioned are only for preferred embodiments of the present invention, but are not intended to limit the present invention. For those skilled in the art, various modifications and changes could be made to the present invention. Any amendments, equivalent replacements, improvements and so on, made within the spirit and principle of the present invention, should be covered within the scope of protection of the present invention.

## Claims

1. A lithium iron phosphate material, comprising lithium iron phosphate particles, **characterized in that** a volume proportion of the lithium iron phosphate particles having a particle size D less than 1 µm is X, 50%<X≤75%, and a volume proportion of the lithium iron phosphate particles having the particle size D greater than or equal to 3 µm is Z, 5%<Z<25%.

2. The lithium iron phosphate material according to claim 1, **characterized in that** the lithium iron phosphate material meets at least one of a-f as follows:
a. 50%<X≤70%, optionally, 50%<X≤60%, optionally, 50%<X≤55%;
b. 5%<Z≤20%, optionally, 5%<Z≤10%; or 20%<Z<25%;
c. a volume proportion of lithium iron phosphate particles having the particle size D greater than or equal to 1 µm and less than 3 µm being Y, wherein 0%<Y≤45%, optionally 10%<Y≤45%, optionally 20%<Y≤30%, and optionally 25%<Y≤30%;
d. the particle size of the lithium iron phosphate particles ranging from 0.01 µm to 15 µm, and optionally, the particle size of the lithium iron phosphate particles ranging from 0.1 µm to 10 µm;
e. a particle size distribution curve of the lithium iron phosphate particles being in bimodal particle size distribution, wherein optionally, in the bimodal particle size distribution curve, the particle size at pits between two peaks ranges from 0.5 µm to 2 µm, and optionally, a volume proportion of the lithium iron phosphate particles at the pits is greater than 0%; and
f. a compacted density ranging from 2.46 g/cm³ to 2.55 g/cm³.

3. A preparation method for the lithium iron phosphate material according to claim 1 or 2, **characterized by** comprising: mixing a ferrophosphorus source, a lithium source and a carbon source, and then performing sintering and pulverization, so as to render the lithium iron phosphate material.

4. The preparation method for the lithium iron phosphate material according to claim 3, **characterized in that** the mixing comprises: mixing the ferrophosphorus source, the lithium source and the carbon source with water to render a mixed slurry, grinding the mixed slurry, and then performing granulation.

5. The preparation method for the lithium iron phosphate material according to claim 4, **characterized in that** the granulation is performed by spray drying, wherein process parameters of the spray drying comprise: a supply speed of the mixed slurry ranging from 50 mL/min to 200 mL/min, an air inlet temperature ranging from 225 °C to 255 °C, and an air outlet temperature ranging from 95 °C to 120 °C.

6. The preparation method for the lithium iron phosphate material according to any one of claims 3-5, **characterized in that** the sintering comprises a first-stage sintering and a second-stage sintering, wherein the first-stage sintering is performed at a temperature ranging from 450 °C to 550 °C, for a duration of sintering ranging from 2 h to 4 h; and the second-stage sintering is performed at a temperature ranging from 790 °C to 805 °C, for a duration of sintering ranging from 8 h to 12 h.

7. The preparation method for the lithium iron phosphate material according to any one of claims 3-6, **characterized in that** the pulverization comprises jet milling, and optionally, process parameters of the jet milling comprise: a classification frequency ranging from 20 Hz to 80 Hz, a pulverization pressure ranging from 0.35 MPa to 0.45 MPa, and a feeding rate ranging from 10 g/min to 50 g/min.

8. The preparation method for the lithium iron phosphate material according to any one of claims 3-7, **characterized in that** the ferrophosphorus source is at least one selected from iron phosphate and ferrous phosphate.

9. The preparation method for the lithium iron phosphate material according to any one of claims 3-7, **characterized in that** the ferrophosphorus source comprises iron oxide and a phosphorus source, and optionally, the phosphorus source is phosphoric acid and/or ammonium hydrogen phosphate.

10. The preparation method for the lithium iron phosphate material according to any one of claims 3-9, **characterized in that** the lithium source is at least one selected from lithium carbonate, lithium hydroxide and lithium acetate.

11. The preparation method for the lithium iron phosphate material according to any one of claims 3-10, **characterized in that** the carbon source is at least one selected from glucose, sucrose, fructose, cellulose, polylactide, gelatin, polyethylene glycol, polyvinyl alcohol and polyvinylpyrrolidone.

12. A positive electrode plate, comprising the lithium iron phosphate material according to claim 1 or 2, or the lithium iron phosphate material obtained by the method according to any one of claims 3-11.

13. A lithium-ion battery, comprising the positive electrode plate according to claim 12.

14. An electric-involved device, comprising the lithium-ion battery according to claim 13.
